(19) Europäisches Patentamt / European Patent Office / Office européen des brevets

(11) **EP 3 451 165 B1**

(12) **EUROPEAN PATENT SPECIFICATION**

(45) Date of publication and mention of the grant of the patent:
**27.07.2022 Bulletin 2022/30**

(21) Application number: **16899925.8**

(22) Date of filing: **12.05.2016**

(51) International Patent Classification (IPC):
**G06F 7/483** (2006.01)   **G06F 9/44** (2018.01)

(52) Cooperative Patent Classification (CPC):
**G06F 7/483; G06F 9/44;** G06F 2207/4824

(86) International application number:
**PCT/CN2016/081846**

(87) International publication number:
**WO 2017/185414 (02.11.2017 Gazette 2017/44)**

(54) **NEURAL NETWORK OPERATION DEVICE AND METHOD SUPPORTING FEW-BIT FLOATING-POINT NUMBER**

VORRICHTUNG UND VERFAHREN FÜR DEN BETRIEB EINES NEURONALEN NETZES MIT UNTERSTÜTZUNG EINER FEW-BIT-GLEITKOMMAZAHL

DISPOSITIF ET PROCÉDÉ DE FONCTIONNEMENT DE RÉSEAU NEURONAL PRENANT EN CHARGE UN NOMBRE À VIRGULE FLOTTANTE À PEU DE BITS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **28.04.2016  CN 201610274809**

(43) Date of publication of application:
**06.03.2019  Bulletin 2019/10**

(73) Proprietor: **Cambricon Technologies Corporation Limited**
**Beijing 100191 (CN)**

(72) Inventors:
• **CHEN, Tianshi**
**Beijing 100191 (CN)**
• **LIU, Shaoli**
**Beijing 100191 (CN)**
• **GUO, Qi**
**Beijing 100191 (CN)**
• **CHEN, Yunji**
**Beijing 100191 (CN)**

(74) Representative: **AWA Sweden AB**
**Box 5117**
**200 71 Malmö (SE)**

(56) References cited:
CN-A- 102 122 240    CN-A- 102 981 854
CN-A- 105 468 331    US-B2- 8 745 111

• MATTHIEU COURBARIAUX ET AL: "Training deep neural networks with low precision multiplications", CORR (ARXIV), vol. 1412.7024, no. v5, 23 September 2015 (2015-09-23), pages 1-10, XP055566721,
• Pete Warden: "Why are Eight Bits Enough for Deep Neural Networks? < Pete Warden's blog", , 23 May 2015 (2015-05-23), XP055642611, Retrieved from the Internet: URL:https://petewarden.com/2015/05/23/why-are-eight-bits-enough-for-deep-neural-netw orks/ [retrieved on 2019-11-14]
• LIU, DAOFU ET AL.: 'PuDianNao: A Polyvalent Machine Learning Accelerator' PROCEEDINGS OF THE TWENTIETH INTERNATIONAL CONFERENCE ON ARCHITECTURAL SUPPORT FOR PROGRAMMING LANGUAGES AND OPERATING SYSTEMS 18 March 2015, pages 369 - 381, XP055420557

## Description

### FIELD OF THE INVENTION

The present invention relates to the technical field of artificial neural network operation, in particular, to a device and method for supporting neural network operations with fewer bit of floating point.

### BACKGROUND OF THE INVENTION

Multi-layer artificial neural networks are widely used in the fields of pattern recognition, image processing, function approximation and optimization calculation. Due to high recognition accuracy and good parallelism, multi-layer artificial networks have received more and more attention in the academic and industrial circles in recent years.

Traditional artificial neural network forward propagation process usually stores 32-bit floating point data types for data storage. However, in the forward propagation processes of most artificial neural networks, the same type of data is concentrated in a certain data range. The 32-bit floating point data range can represent far more than the data range of the same type of data. There are a lot of redundant when the 32-bit floating point data type is used, thus increasing the area overhead for hardware. MATTHIEU COURBARIAUX ET AL: "Training deep neural networks with low precision multiplications", CORR (ARXIV), vol. 1412.7024, no. v5, 23 September 2015 (2015-09-23), pages 1-10, relates to training deep neural networks with low precision multiplications.

### OBJECTS AND SUMMARY OF THE INVENTION

In view of this, one purpose of the present invention is to provide a device for performing a forward propagation process of artificial neural network, and another purpose is to provide a method for performing a forward propagation process of artificial neural network, in order to solve at least one of above technical problems.

The invention is defined by the appended claims.

To achieve above purpose, as one aspect of the present invention, the present invention provides a device for performing a forward propagation process of artificial neural network comprising a floating point data statistics module, a data conversion unit and a floating point data operation module, wherein

the floating point data statistics module is used to perform a statistical analysis on various types of data required for the forward propagation process of artificial neural network to obtain the offset of exponent bit (offset) and the length of the exponent bit (EL), wherein offset represents the offset of exponent bit, EL represents the length of the exponent bit;

the data conversion unit is used to convert the long-bit floating-point data type to the short-bit floating-point data type according to the offset of exponent bit (offset) and the length of the exponent bit (EL) obtained by the floating point data statistics module;

the floating point data operation module is used to perform an artificial neural network forward propagation process on the short-bit floating point data after the data conversion unit uses the short-bit floating point data type to represent all the input, weight, and/or biased data required in the forward propagation process of artificial neural network.

Among those, the floating point data statistics module includes a data extraction unit, a statistical unit, and an analysis unit, wherein the data extracting unit is used for extracting various different types of data in forward propagation process based on the long-bit floating point data, the statistical unit is used to count a data range for the same type of data and a data distribution of each data segment and the analysis unit obtains the offset of exponent bit (offset) and the length of the exponent bit (EL) that should be set for each type of data with a short-bit floating point according to the results counted by the statistical unit.

Among those, the device for performing a forward propagation process of artificial neural network further comprises a rounding unit that is used to perform a rounding operation on the data exceeding the short-bit floating point precision range after the operation is completed.

Among those, the rounding unit is selected from any one of a random rounding unit, a rounding to the nearest integer unit, a round up unit, a round down unit, and a round off unit;

wherein the random rounding unit performs the following operations:

$$y = \begin{cases} \lfloor x \rfloor & \text{w.p. } 1-\frac{x-\lfloor x \rfloor}{\varepsilon} \\ \lfloor x \rfloor + \varepsilon & \text{w.p. } \frac{x-\lfloor x \rfloor}{\varepsilon} \end{cases};$$

wherein y represents the short-bit floating point data after random rounding, x represents the long-bit floating point data before random rounding, and $\varepsilon$ is the smallest positive integer that the current short-bit floating point data representation format can represent, i.e. $2^{offset-(X-1-EL)}$, $\lfloor x \rfloor$ represents the short-bit floating-point data obtained by directly intercepting the original data $x$; w.p. represents a probability, i.e. when the randomly rounded data $y$ is

$\lfloor x \rfloor$ the probability is $1-\dfrac{x-\lfloor x \rfloor}{\varepsilon}$ and when it is $\lfloor x \rfloor +$

$\varepsilon$ the probability is $\dfrac{x - \lfloor x \rfloor}{\varepsilon}$ ;

wherein the rounding to the nearest integer unit performs the following operations:

$$y = \left\{ \begin{array}{ll} \lfloor x \rfloor & \text{if } \lfloor x \rfloor \le x \le \lfloor x \rfloor + \frac{\varepsilon}{2} \\ \lfloor x \rfloor + \varepsilon & \text{if } \lfloor x \rfloor + \frac{\varepsilon}{2} \le x \le \lfloor x \rfloor + \varepsilon \end{array} \right. ;$$

wherein y represents the short-bit floating point data after rounding to the nearest integer, x represents the long-bit floating point data before rounding to the nearest integer, and $\varepsilon$ is the smallest positive integer that the current short-bit floating point data representation format can represent, i.e. $2^{\text{offset}-(X-1-EL)}$, $\lfloor x \rfloor$ is an integer multiple of $\varepsilon$, of which the value is the maximum number less than or equal to x;

wherein the round up unit performs the following operations:

$$y = \lceil x \rceil ;$$

wherein y represents the short-bit floating point data after round up, x represents the long-bit floating point data before round up, $\lceil x \rceil$ is an integer multiple of $\varepsilon$, of which the value is the minimum number more than or equal to x; and $\varepsilon$ is the smallest positive integer that the current short-bit floating point data representation format can represent, i.e. $2^{\text{offset}-(X-1-EL)}$ ;

wherein the round down unit performs the following operations:

$$y = \lfloor x \rfloor ;$$

wherein y represents the short-bit floating point data after round down, x represents the long-bit floating point data before round down, $\lfloor x \rfloor$ is an integer multiple of $\varepsilon$, of which the value is the maximum number less than or equal to x; and $\varepsilon$ is the smallest positive integer that the current short-bit floating point data representation format can represent, i.e. $2^{\text{offset}-(X-1-EL)}$ ;

wherein the round off unit performs the following operations:

$$y = [x] ;$$

wherein y represents the short-bit floating point data after round off, x represents the long-bit floating point data before round off, and [x] represents the short-bit floating point data obtained by directly rounding off the original data *x*.

Among those, the data conversion unit first rounds the data that is to be processed through the rounding unit, then converts the long-bit floating-point data type to the short-bit floating-point data type according to the offset of exponent bit (offset) and the length of the exponent bit (EL) obtained by the floating point data statistics module.

Among those, the device for performing a forward propagation process of artificial neural network further comprises an operation cache unit that stores an intermediate operation result of addition and multiplication in the forward propagation process using the long-bit floating point data type.

As another aspect of the present invention, the present invention further provides a method of performing a forward propagation process of artificial neural network comprising steps of:

obtaining a long-bit floating-point data of each layer of the artificial neural network including weight, bias, and/or input/output values of each layer;

analyzing the long-bit floating point data obtained to obtain the offset of exponent bit (offset) and the length of the exponent bit (EL) required to store the long-bit floating point data;

according to the offset of the exponent bit (offset) and the length of the exponent bit (EL), all the long-bit floating point data are represented by the short-bit floating point data type;

performing the forward propagation process of artificial neural network on the short-bit floating point data.

Among those, in the step of analyzing the long-bit floating point data obtained, an analysis is performed on different layers and different types of data of the artificial neural network to obtain the offset of exponent bit (offset) and the length of the exponent bit (EL) relative to different types of data of the artificial neural network and a calculation is performed respectively.

Among those, in the step of performing the forward propagation process of artificial neural network on the short-bit floating point data, for addition and multiplication operations in forward propagation processes, the intermediate calculation result is stored in the form of long-bit floating point data.

Among those, after performing the forward propagation process of artificial neural network, the weight and biased data involved in the backward operation employ a copy represented by the long-bit floating point data retained during the forward propagation process, and the rest of the data employs the long-bit floating point data converted by the short-bit floating point data, and then a backward calculation is performed.

Based on the above technical solution, the operation device and method of the present invention have the following beneficial effects: the forward propagation process in the form of short-bit floating point can be implemented for multi-layer artificial neural network, thereby greatly reducing the space required to store network parameters, reducing the hardware area overhead, and optimizing the area of the hardware power ratio; the trained neural network model parameter data can be used as a dedicated neural network accelerator and since the short-bit floating point format is used to represent data, the requirement for the transmission bandwidth of the dedicated neural network accelerator can be reduced, and at the same time, the power consumption caused by the calculation can be reduced.

## BRIEF DESCRIPTION OF FIGURES

Fig. 1 is a specific representation method of the short-bit floating point data structure used for data storage, according to an embodiment of the present invention;

Fig. 2 is a schematic block view of the floating point data statistics module of the device for performing the forward propagation process of artificial neural network, according to an embodiments of the present invention;

Fig. 3 is a schematic block view of the short-bit floating point calculation part of the forward propagation process module in the device for performing the forward propagation process of artificial neural network, according to an embodiments of the present invention;

Fig. 4 is an example block view of the process of the forward propagation process of neural network, according to an embodiment of the present invention; Fig. 5 is an example block view of the operation flow of the device for performing the forward propagation process of artificial neural network, according to an embodiment of the present invention;

## DETAILED DESCRIPTION OF THE EMBODIMENTS

In order that the objectives, technical schemes and advantages of the present invention will become more apparent, the present invention will be described in more detail in conjunction with specific embodiments and with reference to the drawings and examples above. Other aspects, advantages, and salient features of the invention will become apparent to those skilled in the art through the following detailed description.

In the present specification, the following various embodiments for describing the principles of the present invention are merely illustrative and should not be construed in any way as limiting the scope of the invention. The following description with reference to the accompanying drawings is provided to assist in a comprehensive understanding of exemplary embodiments of the invention as defined by the claims. The following description includes various specific details to assist in that understanding but these details are to be regarded as merely exemplary. In addition, descriptions of well-known functions and constructions are omitted for clarity and conciseness. Moreover, like reference numerals are used for like functions and operations throughout the drawings.

The present invention discloses a device for performing a forward propagation process of artificial neural network comprising a floating point data statistics module, a data conversion unit and a corresponding floating point data operation module. Among them, the floating point data statistics module is used for statistics and calculations to obtain required exponent bit offset and number of bits required for exponent bit for storing various types of data in the forward propagation process of the artificial neural network; the data conversion unit is used to convert the long bit floating-point data type to the short-bit floating-point data type, such as 32-bit floating point data type conversion; the floating point operation module is used to complete various types of forward propagation processs that are required for short bit floating point data.

Among them, "long-bit floating point data" represents original floating-point data, such as 32-bit floating point data, but it may be a standard 64-bit or 16-bit floating-point number etc., here, only 32 bits are used as a specific embodiment for description; "less-bit floating point data", also known as "short-bit floating point data", means that floating point data is represented by fewer bits than the original floating point data.

The forward propagation process for multi-layer artificial neural network according to the embodiments of the present invention comprises two or more layers of neurons. The short-bit floating point data type is used to represent all the input, weight, and/or biased data required in the forward propagation process and is used to participate in the operation between layers.

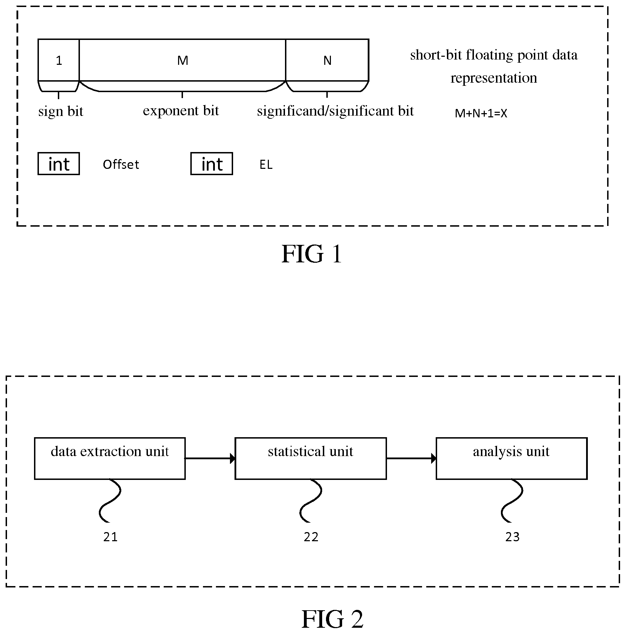

Fig. 1 illustrates a specific representation method of the short-bit floating point data structure used for data storage, according to embodiments of the present invention. Among them, 1-bit is used to represent sign bit, M-bit is used to represent exponent bit, and N-bit is used to represent significand/significant bit; since floating point representation requires that the first significant bit cannot be 0, it can only be 1 for binary, so the most significant bit 1 of the significand can be used as a hidden bit and not written to the memory, the significant bit number of floating point data actually is (N+1) bits; compared with the representation form of 32-bit floating point data, the representation form of short-bit floating point data sets two flag bits for the data of same layer, same type in the neural network such as all weight data in the first convolutional layer in addition to occupying fewer bits, wherein the flag bit (offset) is used to record the initial offset of the exponent bit, actual exponent bit representation = exponent bit representation data + offset, the flag bit (EL) is used to record the number of bits occupied by the exponent bits, then the number of bits occupied by the significand is N=X-1-M.

Fig. 2 illustrates an example block view of the floating data statistics module. It comprises a data extraction unit 21, a statistical unit 22, and an analysis unit 23. The purpose of this module is that through extracting all 32-bit floating point data in a neural network using the 32-bit floating point data type and analyzing these data to obtain the offset of the exponent bit (offset) and the length of the exponent bit (EL) that is used to describe each different type of data in a neural network with short-bit floating-points, the subsequent forward propagation process of short-bit floating point results in a better effect. Among those, the data extraction unit is used for extracting various different types of data in the forward training of 32-bit floating point; the statistical unit is used to count a data range for the same type of data and a data distribution of each data segment and the analysis unit obtains the offset of the exponent bit (offset) and the length of the exponent bit (EL) that should be set for each type of data with a short-bit floating point according to the results counted by the statistical unit, the exponential bit length (EL) is set such that the representable data range contains as much data as possible for this type.

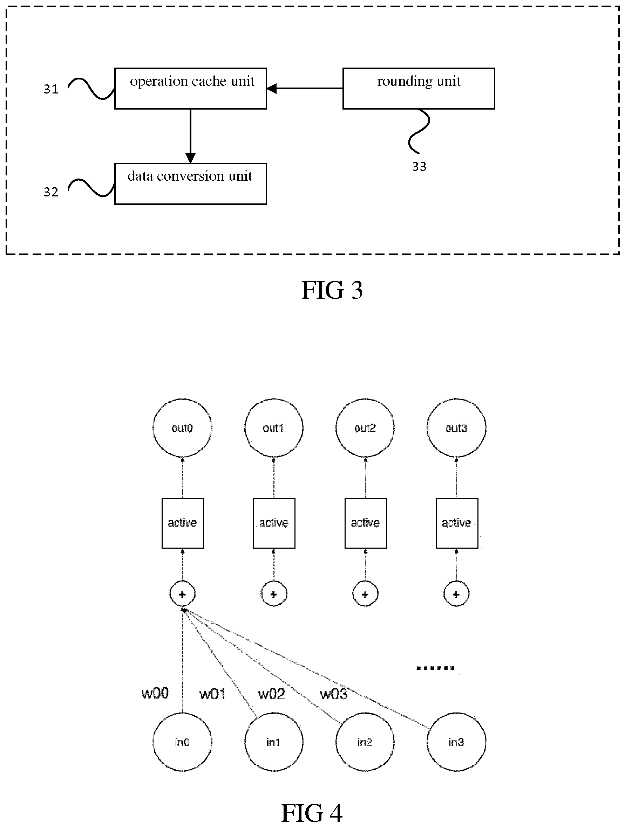

Fig. 3 illustrates an example block view of the short-bit floating point calculation part of the forward propagation process module. It comprises an operation cache unit 31, a data conversion unit 32 and a rounding unit 33. Among those: as addition and multiplication operations may cause the data range to expand during the forward propagation process, the cache unit stores an intermediate result of the forward propagation process using the data type with high precision; a rounding operation is performed on the data exceeding the short-bit floating point precision range after the operation is completed and then the data in cache area is converted to a short-bit floating point data by the data conversion unit 32.

The rounding unit 33 can perform a rounding operation on the data exceeding the short-bit floating point precision range. This unit may be a random rounding unit, a rounding to the nearest integer unit, a round up unit, a round down unit, and a round off unit. Different rounding units can be used to perform different rounding operations on data beyond the short-bit floating point precision range.

The random rounding unit performs the following operations:

$$y = \begin{cases} \lfloor x \rfloor & \text{w.p. } 1 - \frac{x - \lfloor x \rfloor}{\varepsilon} \\ \lfloor x \rfloor + \varepsilon & \text{w.p. } \frac{x - \lfloor x \rfloor}{\varepsilon} \end{cases} ;$$

wherein *y* represents the short-bit floating point data after random rounding, x represents the 32-bit floating point data before random rounding, $\varepsilon$ is the smallest positive integer that the current short-bit floating point data representation format can represent, i.e. $2^{\text{offset-}(X-1-EL)}$, $\lfloor x \rfloor$ represents the short-bit floating-point data obtained by directly intercepting the original data x (equivalent to performing a round down operation on the decimal); w.p. represents a probability, i.e. when the randomly rounded data y is $\lfloor x \rfloor$ the probability is $1 - \frac{x - \lfloor x \rfloor}{\varepsilon}$ and when it is $\lfloor x \rfloor + \varepsilon$ the probability is $\frac{x - \lfloor x \rfloor}{\varepsilon}$.

The rounding to the nearest integer unit performs the following operations:

$$y = \begin{cases} \lfloor x \rfloor & \text{if } \lfloor x \rfloor \leq x \leq \lfloor x \rfloor + \frac{\varepsilon}{2} \\ \lfloor x \rfloor + \varepsilon & \text{if } \lfloor x \rfloor + \frac{\varepsilon}{2} \leq x \leq \lfloor x \rfloor + \varepsilon \end{cases} ;$$

wherein y represents the short-bit floating point data after rounding to the nearest integer, x represents the long-bit floating point data before rounding to the nearest integer, and $\varepsilon$ is the smallest positive integer that the current short-bit floating point data representation format can represent, i.e. $2^{\text{offset-}(X-1-EL)}$, $\lfloor x \rfloor$ is an integer multiple of $\varepsilon$, of which the value is the maximum number less than or equal to x.

The round up unit performs the following operations:

$$y = \lceil x \rceil ;$$

wherein y represents the short-bit floating point data after round up, x represents the long-bit floating point data before round up, $\lceil x \rceil$ is an integer multiple of $\varepsilon$, of which the value is the minimum number more than or equal to x; and $\varepsilon$ is the smallest positive integer that the current short-bit floating point data representation format can represent, i.e. $2^{\text{offset-}(X-1-EL)}$.

The round down unit performs the following operations:

$$y = \lfloor x \rfloor ;$$

wherein y represents the short-bit floating point data after round down, x represents the long-bit floating point data before round down, $\lfloor x \rfloor$ is an integer multiple of $\varepsilon$, of which the value is the maximum number less than or equal to x; and $\varepsilon$ is the smallest positive integer that the current short-bit floating point data representation format can represent, i.e. $2^{\text{offset-}(X-1-EL)}$.

The round off unit performs the following operations:

$$y = [x];$$

wherein y represents the short-bit floating point data after round off, x represents the long-bit floating point data before round off, and [x] represents the number obtained by directly rounding off the short-bit floating point data for the original data *x*.

The present invention further discloses a method of performing a forward propagation process of artificial neural network comprising specific steps of:

The 32-bit floating point model data of each layer of the neural network is obtained through a trained 32-bit floating point model of the neural network, including the weights, biased data, input and output values, and other data parameters of each layer.

An analysis is performed respectively on the data of different layers and different types to obtain the various parameters required with short-bit floating point data representation type, the parameters include how many bits are needed as exponent bits, how many bits are used as significand, and the data range to be represented by exponent bits, etc.

The short-bit floating point representation obtained by statistics is used for forward propagation processs of the neural network, that is, all data in the forward propagation processes of the neural network is represented by a short-bit floating point format, and at the same time, a copy represented by 32-bit floating point data is reserved for the weight and biased data of the neural network, and then a forward training is performed. For forward propagation processes, some operations will cause the data range to expand, such as addition, multiplication, and so on. It is necessary to use the cache space to store the intermediate calculation results, which are stored in 32-bit floating point format and after calculation returned to the corresponding short-bit floating point format. The process of converting 32-bit floating point to short-bit floating point requires rounding, which includes random rounding, rounding to the nearest integer, etc. that are expressed as follows:

The random rounding operation is as follows:

$$y = \left\{ \begin{array}{ll} \lfloor x \rfloor & \text{w.p. } 1 - \frac{x - \lfloor x \rfloor}{\varepsilon} \\ \lfloor x \rfloor + \varepsilon & \text{w.p. } \frac{x - \lfloor x \rfloor}{\varepsilon} \end{array} \right. ;$$

wherein *y* represents the short-bit floating point data after random rounding, x represents the 32-bit floating point data before random rounding, $\varepsilon$ is the smallest positive integer that the current short-bit floating point data representation format can represent, i.e. $2^{offset-(X-1-EL)}$, $\lfloor x \rfloor$ represents the short-bit floating-point data obtained by directly intercepting the original data x (equivalent to performing a round down operation on the decimal); w.p. represents a probability, i.e. when the randomly rounded data y is $\lfloor x \rfloor$ the probability is $1 - \frac{x - \lfloor x \rfloor}{\varepsilon}$ and when it is $\lfloor x \rfloor + \varepsilon$ the probability is $\frac{x - \lfloor x \rfloor}{\varepsilon}$.

The rounding to the nearest integer operation is as follows:

$$y = \left\{ \begin{array}{ll} \lfloor x \rfloor & \text{if } \lfloor x \rfloor \leq x \leq \lfloor x \rfloor + \frac{\varepsilon}{2} \\ \lfloor x \rfloor + \varepsilon & \text{if } \lfloor x \rfloor + \frac{\varepsilon}{2} \leq x \leq \lfloor x \rfloor + \varepsilon \end{array} \right. ;$$

wherein y represents the short-bit floating point data after rounding to the nearest integer, x represents the long-bit floating point data before rounding to the nearest integer, and $\varepsilon$ is the smallest positive integer that the current short-bit floating point data representation format can represent, i.e. $2^{offset-(X-1-EL)}$, $\lfloor x \rfloor$ is an integer multiple of $\varepsilon$, of which the value is the maximum number less than or equal to x.

The round up operation is as follows:

$$y = \lceil x \rceil ;$$

wherein y represents the short-bit floating point data after round up, x represents the long-bit floating point data before round up, $\lceil x \rceil$ is an integer multiple of $\varepsilon$, of which the value is the minimum number more than or equal to x; and $\varepsilon$ is the smallest positive integer that the current short-bit floating point data representation format can represent, i.e. $2^{offset-(X-1-EL)}$.

The round down operation is as follows:

$$y = \lfloor x \rfloor ;$$

wherein y represents the short-bit floating point data after round down, x represents the long-bit floating point data before round down, $\lfloor x \rfloor$ is an integer multiple of $\varepsilon$, of which the value is the maximum number less than or equal to x; and $\varepsilon$ is the smallest positive integer that the current short-bit floating point data representation format can represent, i.e. $2^{offset-(X-1-EL)}$.

The round off operation is as follows:

$$y = [x];$$

wherein y represents the short-bit floating point data after round off, x represents the long-bit floating point data before round off, and [x] represents the number obtained by directly rounding off the short-bit floating point data for the original data x.

After the forward propagation process is completed, when the backward operation is performed, the data in the forward propagation process has to be converted into the 32-bit floating point to participate in the backward operation through the data conversion unit converting the short-bit floating point to the 32-bit floating point, wherein the weights and biased data involved in the backward operation uses a copy of the 32-bit floating point data retained in the forward propagation process. After the end of the backward operation, the subsequent operation is performed after the data conversion unit converting the 32-bit floating point to short-bit floating point data. At the same time, a copy of the 32-bit floating point data representation is still reserved for the weight and biased data of the neural network. The rounding operation has to be performed during the conversion process, and the operation is the same as the rounding operation in the forward propagation process.

The forward and backward operations as described above are repeated until the neural network training is completed.

Fig. 4 is a flow chart of the process of the forward propagation process of single-layer artificial neural network, according to an embodiment of the present invention. The flow chart describes the process of achieving a forward propagation process for single-layer artificial neural network using the device and instruction set of the present invention. For each layer, an intermediate result vector of the layer is first calculated by weighted summation of the input neuron vector. The intermediate result vector is biased and activated to obtain an output neuron vector. The output neuron vector is the input neuron vector of the next layer.

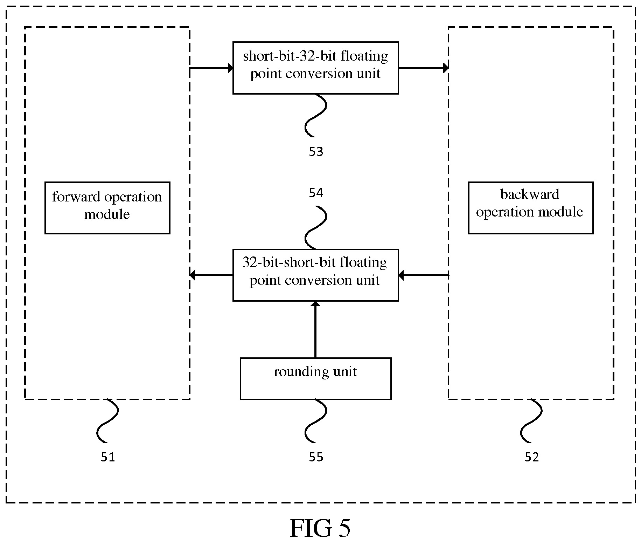

Fig. 5 is an example block view of the operation flow according to an embodiment of the present invention; Among them, the forward propagation process module 51 includes the short-bit floating point calculation module shown in FIG. 3. The parameters other than weight and biased data obtained by the forward propagation process must first be converted to a 32-bit floating point through the short-bit-32-bit floating point conversion unit 53 for a backward propagation operation before backward propagation, and have to be converted to a short-bit floating-point data through the 32-bit-short-bit floating point conversion unit 54 after the backward operation module 53 performing the backward propagation operation. During the conversion process, a rounding operation shown in Fig. 3 should be performed on the data exceeding the short-bit floating point precision range by the rounding unit 55.

Through the use of short-bit floating point representations of data for forward propagation processes, the data range space of short-bit floating point data format is fully utilized. Compared with 32-bit floating point data representation, the space required for storage of network parameters is greatly reduced and the area-to-power ratio of the hardware is optimized.

Processes or methods depicted in the preceding figures may be implemented by the processing logic including hardware (eg, circuitry, dedicated logic, etc.), firmware, software (eg, software carried on a non-transitory computer readable medium) or the combination thereof to perform. Although the processes or methods are described above in terms of certain sequential operations, it should be understood that some of the described operations can be performed in a different order. In addition, some operations may be performed in parallel rather than sequentially.

The specific embodiments described above are intended to further explain the objects, technical solutions, and advantageous effects of the present invention, it should be understood that the foregoing description is only specific embodiments of the invention, and is not intended to limit the invention.

## Claims

1. A device for performing a forward propagation process of an artificial neural network comprising a floating point data statistics module, a data conversion unit (32) and a floating point data operation module, wherein:

   the floating point data statistics module is used to perform a statistical analysis on various types of data required for the forward propagation process of artificial neural network, to obtain an offset of an exponent bit, offset, and a length of the exponent bit, EL;
   wherein the floating point data statistics module comprises a data extraction unit (21), a statistical unit (22), and an analysis unit (23),

      wherein the data extracting unit (21) is used to extract the various types of data for the forward propagation process based on long-bit floating point data,
      the statistical unit (22) is used to count the data range of a same type of data and the data distribution of each data segment, and the analysis unit (23) is used to, based on the data range of a same type of data and the data distribution of each data segment counted by the statistical unit, obtain the offset of the exponent bit, offset, and the length of the exponent bit, EL, that should be set for each of the various types of data represented as the short-bit floating point data;
      wherein the long-bit floating point data is original floating point data, the short-bit floating point data means that the original floating point data is represented by fewer bits than the original floating point data;

wherein the length of the exponent bit, EL, for each of the various types of data is set such that a representable data range comprises as much data as possible for this type of data; the data conversion unit is used to convert a long-bit floating-point data type to a short-bit floating-point data type, based on the offset of the exponent bit, offset, and the length of the exponent bit, EL, obtained by the floating point data statistics module; after inputs, weights, and/or biased data required for the forward propagation process of artificial neural network are represented as short-bit floating point data in the short-bit floating point data type, by the data conversion unit, the floating point data operation module is used to perform the forward propagation process of artificial neural network on the short-bit floating point data.

2. The device for performing a forward propagation process of an artificial neural network according to claim 1, **characterized by** further comprising a rounding unit (33) that is used to perform a rounding operation on the data exceeding the short-bit floating point precision range after the operation is completed.

3. The device for performing a forward propagation process of an artificial neural network according to claim 2, **characterized in that** the rounding unit is selected from any one of a random rounding unit, a rounding to the nearest integer unit, a round up unit, a round down unit, and a round off unit.

4. The device for performing a forward propagation process of an artificial neural network according to claim 3, wherein the random rounding unit performs the following operations:

$$y = \begin{cases} \lfloor x \rfloor & \text{w.p.} \ 1 - \frac{x - \lfloor x \rfloor}{\varepsilon} \\ \lfloor x \rfloor + \varepsilon & \text{w.p.} \ \frac{x - \lfloor x \rfloor}{\varepsilon} \end{cases}.$$

wherein y represents the short-bit floating point data after random rounding, x represents the long-bit floating point data before random rounding, and $\varepsilon$ is the smallest positive integer that the current short-bit floating point data representation format can represent, i.e. $2^{\text{offset-(X-1-EL)}}$, $\lfloor x \rfloor$ represents the short-bit floating-point data obtained by directly intercepting the original data $x$; w.p. represents a probability, i.e. when the randomly rounded data y is $\lfloor x \rfloor$ the probability is $1 - \frac{x - \lfloor x \rfloor}{\varepsilon}$ and when it is $\lfloor x \rfloor + \varepsilon$ the probability is $\frac{x - \lfloor x \rfloor}{\varepsilon}$;

wherein the rounding to the nearest integer unit performs the following operations:

$$y = \begin{cases} \lfloor x \rfloor & \text{if} \ \lfloor x \rfloor \leq x \leq \lfloor x \rfloor + \frac{\varepsilon}{2} \\ \lfloor x \rfloor + \varepsilon & \text{if} \ \lfloor x \rfloor + \frac{\varepsilon}{2} \leq x \leq \lfloor x \rfloor + \varepsilon \end{cases};$$

wherein y represents the short-bit floating point data after rounding to the nearest integer, X represents the long-bit floating point data before rounding to the nearest integer, and $\varepsilon$ is the smallest positive integer that the current short-bit floating point data representation format can represent, i.e. $2^{\text{offset-(X-1-EL)}}$, $\lfloor x \rfloor$ is an integer multiple of $\varepsilon$, of which the value is the maximum number less than or equal to X; wherein the round up unit performs the following operations:

$$y = \lceil x \rceil;$$

wherein y represents the short-bit floating point data after rounding up, x represents the long-bit floating point data before rounding up, $\lceil x \rceil$ is an integer multiple of $\varepsilon$, of which the value is the minimum number more than or equal to x; and $\varepsilon$ is the smallest positive integer that the current short-bit floating point data representation format can represent, i.e. $2^{\text{offset-(X-1-EL)}}$;

wherein the round down unit performs the following operations:

$$y = \lfloor x \rfloor;$$

wherein y represents the short-bit floating point data after rounding down, x represents the long-bit floating point data before rounding down, $\lceil x \rceil$ is an integer multiple of $\varepsilon$, of which the value is the maximum number less than or equal to x; and $\varepsilon$ is the smallest positive integer that the current short-bit floating point data representation format can represent, i.e. $2^{\text{offset-(X-1-EL)}}$;

wherein the round off unit performs the following operations:

$$y = [x];$$

wherein y represents the short-bit floating point data after rounding off, x represents the long-bit floating point data before rounding off, and [x] represents the number obtained by directly rounding off the short-bit floating point data for the original data x.

5. The device for performing a forward propagation process of an artificial neural network according to claim 2, **characterized in that** the data conversion unit first rounds the data that is to be processed through the rounding unit, then converts the long-bit floating-point data type to the short-bit floating-point data type according to the offset of the exponent bit, offset, and the length of the exponent bit, EL, obtained by the floating point data statistics module.

6. The device for performing a forward propagation process of an artificial neural network according to claim 1, **characterized by** further comprising an operation cache unit (31) that stores an intermediate operation result of addition and multiplication in the forward propagation process using the long-bit floating point data type.

7. A method of performing a forward propagation process of an artificial neural network, comprising the steps of:

performing, by a floating point data statistics module, a statistical analysis on various types of data required for the forward propagation process of artificial neural network, to obtain an offset of an exponent bit, offset, and a length of the exponent bit, EL;

wherein the floating point data statistics module comprises a data extraction unit (21), a statistical unit (22), and an analysis unit (23),
wherein the method further comprises:

the data extracting unit (21) extracting the various types of data for the forward propagation process based on long-bit floating point data,
the statistical unit (22) counting the data range of a same type of data and the data distribution of each data segment, and
the analysis unit (23), based on the data range of a same type of data and the data distribution of each data segment counted by the statistical unit, obtaining the offset of the exponent bit, offset, and the length of the exponent bit, EL, that should be set for each of the various types of data represented as the short-bit floating point data;

wherein the long-bit floating point data is original floating point data, the short-bit floating point data means that the original floating point data is represented by fewer bits than the original floating point data;
wherein the length of the exponent bit, EL, for each of the various types of data is set such that a representable data range comprises as much data as possible for this type of data;

converting, by a data conversion unit (32), a long-bit floating-point data type to a short-bit floating-point data type, based on the offset of the exponent bit, offset, and the length of the exponent bit, EL, obtained by the floating point data statistics module;
after inputs, weights, and/or biased data required for the forward propagation process of artificial neural network are represented as short-bit floating point data in the short-bit floating point data type, by the data conversion unit, performing, by a floating point data operation module, the forward propagation process of artificial neural network on the short-bit floating point data.

8. The method according to claim 7, **characterized by** further comprising a rounding unit (33) performing a rounding operation on the data exceeding the short-bit floating point precision range after the operation is completed.

9. The method according to claim 8, **characterized in that** the rounding unit is selected from any one of a random rounding unit, a rounding to the nearest integer unit, a round up unit, a round down unit, and a round off unit.

10. The method according to claim 9, further comprising the random rounding unit performing the following operations:

$$y = \begin{cases} \lfloor x \rfloor & \text{w.p. } 1-\frac{x-\lfloor x \rfloor}{\varepsilon} \\ \lfloor x \rfloor+\varepsilon & \text{w.p. } \frac{x-\lfloor x \rfloor}{\varepsilon} \end{cases} ;$$

wherein y represents the short-bit floating point data after random rounding, x represents the long-bit floating point data before random rounding, and $\varepsilon$ is the smallest positive integer that the current short-bit floating point data representation format can represent, i.e. $2^{offset-(X-1-EL)}$, $\lfloor x \rfloor$ represents the short-bit floating-point data obtained by directly intercepting the original data *x*; w.p. represents a probability, i.e. when the randomly rounded data y is $\lfloor x \rfloor$ the probability is $1-\frac{x-\lfloor x \rfloor}{\varepsilon}$ and when it is $\lfloor x \rfloor + \varepsilon$ the probability is $\frac{x-\lfloor x \rfloor}{\varepsilon}$; the rounding to the nearest integer unit performing the following operations:

$$y = \begin{cases} \lfloor x \rfloor & \text{if } \lfloor x \rfloor \le x \le \lfloor x \rfloor + \frac{\varepsilon}{2} \\ \lfloor x \rfloor + \varepsilon & \text{if } \lfloor x \rfloor + \frac{\varepsilon}{2} \le x \le \lfloor x \rfloor + \varepsilon \end{cases};$$

wherein y represents the short-bit floating point data after rounding to the nearest integer, X represents the long-bit floating point data before rounding to the nearest integer, and $\varepsilon$ is the smallest positive integer that the current short-bit floating point data representation format can represent, i.e. $2^{\text{offset-(X-1-EL)}}$, $\lfloor x \rfloor$ is an integer multiple of $\varepsilon$, of which the value is the maximum number less than or equal to X; the round up unit performing the following operations:

$$y = \lceil x \rceil;$$

wherein y represents the short-bit floating point data after rounding up, x represents the long-bit floating point data before rounding up, $\lceil x \rceil$ is an integer multiple of $\varepsilon$, of which the value is the minimum number more than or equal to x; and $\varepsilon$ is the smallest positive integer that the current short-bit floating point data representation format can represent, i.e. $2^{\text{offset-(X-1-EL)}}$;
the round down unit performing the following operations:

$$y = \lfloor x \rfloor;$$

wherein y represents the short-bit floating point data after rounding down, x represents the long-bit floating point data before rounding down, $\lceil x \rceil$ is an integer multiple of $\varepsilon$, of which the value is the maximum number less than or equal to x; and $\varepsilon$ is the smallest positive integer that the current short-bit floating point data representation format can represent, i.e. $2^{\text{offset-(X-1-EL)}}$;
the round off unit performing the following operations:

$$y = [x];$$

wherein y represents the short-bit floating point data after rounding off, x represents the long-bit floating point data before rounding off, and [x] represents the number obtained by directly rounding off the short-bit floating point data for the original data x.

**11.** The method according to claim 8, further comprising the data conversion unit first rounding the data that is to be processed through the rounding unit, then converting the long-bit floating-point data type to the short-bit floating-point data type according to the offset of the exponent bit, offset, and the length of the exponent bit, EL, obtained by the floating point data statistics module.

**12.** The method according to claim 7, further comprising an operation cache unit (31) storing an intermediate operation result of addition and multiplication in the forward propagation process using the long-bit floating point data type.

**Patentansprüche**

**1.** Vorrichtung zum Durchführen eines Vorwärtspropagationsprozesses eines künstlichen neuronalen Netzes, die ein Gleitkommadatenstatistikmodul, eine Datenkonvertierungseinheit (32) und ein Gleitkommadatenoperationsmodul umfasst, wobei:

das Gleitkommadatenstatistikmodul verwendet wird, um eine statistische Analyse an verschiedenen Typen von Daten durchzuführen, die für den Vorwärtspropagationsprozess des künstlichen neuronalen Netzes benötigt werden, um einen Versatz eines Exponentenbits (Versatz) und eine Länge des Exponentenbits (EL) zu erhalten;
wobei das Gleitkommadatenstatistikmodul eine Datenextraktionseinheit (21), eine Statistikeinheit (22) und eine Analyseeinheit (23) umfasst, wobei die Datenextraktionseinheit (21) dafür verwendet wird, die verschiedenen Typen von Daten für den Vorwärtspropagationsprozess auf der Grundlage von Langbit-Gleitkommadaten zu extrahieren,

wobei die Statistikeinheit (22) dafür verwendet wird, den Datenbereich eines selben Typs von Daten und die Datenverteilung jedes Datensegments zu zählen, und
wobei die Analyseeinheit (23) dafür verwendet wird, auf der Grundlage des Datenbereichs eines selben Typs von Daten und der Datenverteilung jedes Datensegments, das durch die statistische Einheit gezählt wird, den Versatz des Exponentenbits (Versatz) und die Länge des Exponentenbits (EL) zu erhalten, die für jeden der verschiedenen Typen von Daten, die als die Kurzbit-Gleitkommadaten dargestellt werden, zu setzen sind;
wobei die Langbit-Gleitkommadaten ursprüngliche Gleitkommadaten sind, wobei die Kurzbit-Gleitkommadaten bedeuten, dass die ursprünglichen Gleitkommadaten durch weniger Bits als die ursprünglichen Gleitkommadaten dargestellt werden;

wobei die Länge des Exponentenbits (EL) für jeden der verschiedenen Typen von Daten so eingestellt wird, dass ein darstellbarer Datenbereich so viele Daten wie möglich für diesen Datentyp umfasst;
wobei die Datenkonvertierungseinheit dafür verwendet wird, einen Langbit-Gleitkommadatentyp auf der Grundlage des Versatzes des Exponentenbits (Versatz) und der Länge des Exponentenbits (EL), die durch das Gleitkommadatenstatistikmodul erhalten werden, in einen Kurzbit-Gleitkommadatentyp zu konvertieren;
wobei, nachdem Eingaben, Gewichte und/oder verzerrte Daten, die für den Vorwärtspropagationsprozess des künstlichen neuronalen Netzes benötigt werden, durch die Datenkonvertierungseinheit als Kurzbit-Gleitkommadaten in dem Kurzbit-Gleitkommadatentyp dargestellt wurden, das Gleitkommadatenoperationsmodul dafür verwendet wird, den Vorwärtspropagationsprozess des künstlichen neuronalen Netzes an den Kurzbit-Gleitkommadaten durchzuführen.

2. Vorrichtung zum Durchführen eines Vorwärtspropagationsprozesses eines künstlichen neuronalen Netzes nach Anspruch 1, **dadurch gekennzeichnet, dass** sie des Weiteren eine Rundungseinheit (33) umfasst, die dafür verwendet wird, eine Rundungsoperation an den Daten, die den Kurzbit-Gleitkommapräzisionsbereich überschreiten, durchzuführen, nachdem die Operation abgeschlossen ist.

3. Vorrichtung zum Durchführen eines Vorwärtspropagationsprozesses eines künstlichen neuronalen Netzes nach Anspruch 2, **dadurch gekennzeichnet, dass** die Rundungseinheit aus einer Einheit zum Runden nach dem Zufallsprinzip, einer Einheit zum Runden auf die nächste ganze Zahl, einer Aufrundungseinheit, einer Abrundungseinheit und einer Auf-/Abrundungseinheit ausgewählt ist.

4. Vorrichtung zum Durchführen eines Vorwärtspropagationsprozesses eines künstlichen neuronalen Netzes nach Anspruch 3,
wobei die Einheit zum Runden nach dem Zufallsprinzip die folgenden Operationen durchführt:

$$y = \begin{cases} \lfloor x \rfloor & \text{w.p. } 1 - \frac{x - \lfloor x \rfloor}{\varepsilon} \\ \lfloor x \rfloor + \varepsilon & \text{w.p. } \frac{x - \lfloor x \rfloor}{\varepsilon} \end{cases}.$$

wobei y die Kurzbit-Gleitkommadaten nach dem Runden nach dem Zufallsprinzip darstellt, x die Langbit-Gleitkommadaten vor dem Runden nach dem Zufallsprinzip darstellt, und $\varepsilon$ die kleinste positive ganze Zahl ist, die das momentane Kurzbit-Gleitkommadatendarstellungsformat darstellen kann, das heißt $2^{\text{Versatz}(X-1-EL)}$, $\lfloor x \rfloor$ die Kurzbit-Gleitkommadaten darstellt, die durch direktes Abfangen der ursprünglichen Daten x erhalten werden, und w.p. eine Wahrscheinlichkeit darstellt, das heißt, wenn die nach dem Zufallsprinzip gerundeten Daten y $\lfloor x \rfloor$ sind, so ist die Wahrscheinlichkeit $1 - \frac{x - \lfloor x \rfloor}{\varepsilon}$, und wenn sie $\lfloor x \rfloor + \varepsilon$ sind, so ist die Wahrscheinlichkeit $\frac{x - \lfloor x \rfloor}{\varepsilon}$;

wobei die Einheit zum Runden auf die nächste ganze Zahl die folgenden Operationen durchführt:

$$y = \begin{cases} \lfloor x \rfloor & \text{falls} & \lfloor x \rfloor \leq x \leq \lfloor x \rfloor + \frac{\varepsilon}{2} \\ \lfloor x \rfloor + \varepsilon & \text{falls} & \lfloor x \rfloor + \frac{\varepsilon}{2} \leq x \leq \lfloor x \rfloor + \varepsilon \end{cases};$$

wobei y die Kurzbit-Gleitkommadaten nach dem Runden auf die nächste ganze Zahl darstellt, X die Langbit-Gleitkommadaten vor dem Runden auf die nächste ganze Zahl darstellt, und $\varepsilon$ die kleinste positive ganze Zahl ist, die das momentane Kurzbit-Gleitkommadatendarstellungsformat darstellen kann, das heißt $2^{\text{Versatz}-(X-1-EL)}$, und $\lfloor x \rfloor$ ein ganzzahliges Vielfaches von $\varepsilon$ ist, dessen Wert die größte Zahl kleiner oder gleich X ist;
wobei die Aufrundungseinheit die folgenden Operationen durchführt:

$$y = \lceil x \rceil;$$

wobei y die Kurzbit-Gleitkommadaten nach dem Aufrunden darstellt, x die Langbit-Gleitkommadaten vor dem Aufrunden darstellt, $\lceil x \rceil$ ein ganzzahliges Vielfaches von $\varepsilon$ ist, dessen Wert die kleinste Zahl größer oder gleich x ist; und $\varepsilon$ die kleinste positive ganze Zahl ist, die das momentane Kurzbit-Gleitkommadatendarstellungsformat darstellen kann, das heißt $2^{\text{Versatz}-(X-1-EL)}$;
wobei die Abrundungseinheit die folgenden Operationen durchführt:

$$y = \lfloor x \rfloor;$$

wobei y die Kurzbit-Gleitkommadaten nach dem Abrunden darstellt, x die Langbit-Gleitkommadaten vor dem Abrunden darstellt, ⌈x⌉ ein ganzzahliges Vielfaches von $\varepsilon$ ist, dessen Wert die größte Zahl kleiner oder gleich x ist; und $\varepsilon$ die kleinste positive ganze Zahl ist, die das momentane Kurzbit-Gleitkommadatendarstellungsformat darstellen kann, das heißt $2^{Versatz-(X-1-EL)}$;

wobei die Auf-/Abrundungseinheit die folgenden Operationen durchführt:

$$y = [x];$$

wobei y die Kurzbit-Gleitkommadaten nach dem Auf-/Abrunden darstellt, x die Langbit-Gleitkommadaten vor dem Auf-/Abrunden darstellt, und ⌈x⌉ die Zahl darstellt, die durch direktes Auf-/Abrunden der Kurzbit-Gleitkommadaten für die ursprünglichen Daten x erhalten wird.

5. Vorrichtung zum Durchführen eines Vorwärtspropagationsprozesses eines künstlichen neuronalen Netzes nach Anspruch 2, **dadurch gekennzeichnet, dass** die Datenkonvertierungseinheit zuerst die Daten rundet, die durch die Rundungseinheit verarbeitet werden sollen, und dann den Langbit-Gleitkommadatentyp gemäß dem Versatz des Exponentenbits (Versatz) und der Länge des Exponentenbits (EL), die durch das Gleitkommadatenstatistikmodul erhalten werden, in den Kurzbit-Gleitkommadatentyp konvertiert.

6. Vorrichtung zum Durchführen eines Vorwärtspropagationsprozesses eines künstlichen neuronalen Netzes nach Anspruch 1, **dadurch gekennzeichnet, dass** sie des Weiteren eine Operations-Cache-Einheit (31) umfasst, die ein Zwischenoperationsergebnis der Addition und Multiplikation in dem Vorwärtspropagationsprozess unter Verwendung des Langbit-Gleitkommadatentyps speichert.

7. Verfahren zum Durchführen eines Vorwärtspropagationsprozesses eines künstlichen neuronalen Netzes, das die folgenden Schritte umfasst:

Durchführen, durch ein Gleitkommadatenstatistikmodul, einer statistischen Analyse an verschiedenen Typen von Daten, die für den Vorwärtspropagationsprozess des künstlichen neuronalen Netzes benötigt werden, um einen Versatz eines Exponentenbits (Versatz) und eine Länge des Exponentenbits (EL) zu erhalten; wobei das Gleitkommadatenstatistikmodul eine

Datenextraktionseinheit (21), eine Statistikeinheit (22) und eine Analyseeinheit (23) umfasst, wobei das Verfahren des Weiteren umfasst:

die Datenextraktionseinheit (21) die verschiedenen Typen von Daten für den Vorwärtspropagationsprozess auf der Grundlage von Langbit-Gleitkommadaten extrahiert,

die Statistikeinheit (22) den Datenbereich eines selben Typs von Daten und die Datenverteilung jedes Datensegments zählt, und

die Analyseeinheit (23) auf der Grundlage des Datenbereichs eines selben Typs von Daten und der Datenverteilung jedes Datensegments, das durch die statistische Einheit gezählt wird, den Versatz des Exponentenbits (Versatz) und die Länge des Exponentenbits (EL) erhält, die für jeden der verschiedenen Typen von Daten, die als die Kurzbit-Gleitkommadaten dargestellt werden, zu setzen sind;

wobei die Langbit-Gleitkommadaten ursprüngliche Gleitkommadaten sind, wobei die Kurzbit-Gleitkommadaten bedeuten, dass die ursprünglichen Gleitkommadaten durch weniger Bits als die ursprünglichen Gleitkommadaten dargestellt werden;

wobei die Länge des Exponentenbits (EL) für jeden der verschiedenen Typen von Daten so eingestellt wird, dass ein darstellbarer Datenbereich so viele Daten wie möglich für diesen Datentyp umfasst;

Konvertieren, durch eine Datenkonvertierungseinheit (32), eines Langbit-Gleitkommadatentyps auf der Grundlage des Versatzes des Exponentenbits (Versatz) und der Länge des Exponentenbits (EL), die durch das Gleitkommadatenstatistikmodul erhalten werden, in einen Kurzbit-Gleitkommadatentyp;

nachdem Eingaben, Gewichte und/oder verzerrte Daten, die für den Vorwärtspropagationsprozess des künstlichen neuronalen Netzes benötigt werden, durch die Datenkonvertierungseinheit als Kurzbit-Gleitkommadaten in dem Kurzbit-Gleitkommadatentyp dargestellt wurden, Durchführen, durch ein Gleitkommadatenoperationsmodul, des Vorwärtspropagationsprozesses des künstlichen neuronalen Netzes an den Kurzbit-Gleitkommadaten.

8. Verfahren nach Anspruch 7, **dadurch gekennzeichnet, dass** es des Weiteren eine Rundungseinheit (33) umfasst, die eine Rundungsoperation an den Daten durchführt, die den Kurzbit-Gleitkommapräzisionsbereich überschreiten, nachdem die Operation abgeschlossen ist.

**9.** Verfahren nach Anspruch 8, **dadurch gekennzeichnet, dass** die Rundungseinheit aus einer Einheit zum Runden nach dem Zufallsprinzip, einer Einheit zum Runden auf die nächste ganze Zahl, einer Aufrundungseinheit, einer Abrundungseinheit und einer Auf-/Abrundungseinheit ausgewählt wird.

**10.** Verfahren nach Anspruch 9, das des Weiteren umfasst, dass die Einheit zum Runden nach dem Zufallsprinzip die folgenden Operationen durchführt:

$$y = \begin{cases} \lfloor x \rfloor & \text{w.p. } 1 - \frac{x - \lfloor x \rfloor}{\varepsilon} \\ \lfloor x \rfloor + \varepsilon & \text{w.p. } \frac{x - \lfloor x \rfloor}{\varepsilon} \end{cases}.$$

wobei y die Kurzbit-Gleitkommadaten nach dem Runden nach dem Zufallsprinzip darstellt, x die Langbit-Gleitkommadaten vor dem Runden nach dem Zufallsprinzip darstellt, und $\varepsilon$ die kleinste positive ganze Zahl ist, die das momentane Kurzbit-Gleitkommadatendarstellungsformat darstellen kann, das heißt $2^{\text{Versatz}(X-1-EL)}$, $\lfloor x \rfloor$ die Kurzbit-Gleitkommadaten darstellt, die durch direktes Abfangen der ursprünglichen Daten x erhalten werden, und w.p. eine Wahrscheinlichkeit darstellt, das heißt, wenn die nach dem Zufallsprinzip gerundeten Daten y $\lfloor x \rfloor$ sind, so ist die Wahrscheinlichkeit $1 - \frac{x - \lfloor x \rfloor}{\varepsilon}$ und wenn sie $\lfloor x \rfloor + \varepsilon$ sind, so ist die Wahrscheinlichkeit $\frac{x - \lfloor x \rfloor}{\varepsilon}$;

die Einheit zum Runden auf die nächste ganze Zahl die folgenden Operationen durchführt:

$$y = \begin{cases} \lfloor x \rfloor & \text{falls} & \lfloor x \rfloor \le x \le \lfloor x \rfloor + \frac{\varepsilon}{2} \\ \lfloor x \rfloor + \varepsilon & \text{falls} & \lfloor x \rfloor + \frac{\varepsilon}{2} \le x \le \lfloor x \rfloor + \varepsilon \end{cases};$$

wobei y die Kurzbit-Gleitkommadaten nach dem Runden auf die nächste ganze Zahl darstellt, X die Langbit-Gleitkommadaten vor dem Runden auf die nächste ganze Zahl darstellt, und $\varepsilon$ die kleinste positive ganze Zahl ist, die das momentane Kurzbit-Gleitkommadatendarstellungsformat darstellen kann, das heißt $2^{\text{Versatz}-(X-1-EL)}$, und $\lfloor x \rfloor$ ein ganzzahliges Vielfaches von $\varepsilon$ ist, dessen Wert die größte Zahl kleiner oder gleich X ist;

die Aufrundungseinheit die folgenden Operationen durchführt:

$$y = \lceil x \rceil;$$

wobei y die Kurzbit-Gleitkommadaten nach dem Aufrunden darstellt, x die Langbit-Gleitkommadaten vor dem Aufrunden darstellt, $\lceil x \rceil$ ein ganzzahliges Vielfaches von $\varepsilon$ ist, dessen Wert die kleinste Zahl größer oder gleich x ist; und $\varepsilon$ die kleinste positive ganze Zahl ist, die das momentane Kurzbit-Gleitkommadatendarstellungsformat darstellen kann, das heißt $2^{\text{Versatz}-(X-1-EL)}$;

die Abrundungseinheit die folgenden Operationen durchführt:

$$y = \lfloor x \rfloor;$$

wobei y die Kurzbit-Gleitkommadaten nach dem Abrunden darstellt, x die Langbit-Gleitkommadaten vor dem Abrunden darstellt, $\lceil x \rceil$ ein ganzzahliges Vielfaches von $\varepsilon$ ist, dessen Wert die größte Zahl kleiner oder gleich x ist; und $\varepsilon$ die kleinste positive ganze Zahl ist, die das momentane Kurzbit-Gleitkommadatendarstellungsformat darstellen kann, das heißt $2^{\text{Versatz}-(X-1-EL)}$; die Auf-/Abrundungseinheit die folgenden Operationen durchführt:

$$y = [x];$$

wobei y die Kurzbit-Gleitkommadaten nach dem Auf-/Abrunden darstellt, x die Langbit-Gleitkommadaten vor dem Auf-/Abrunden darstellt, und $[x]$ die Zahl darstellt, die durch direktes Auf-/Abrunden der Kurzbit-Gleitkommadaten für die ursprünglichen Daten x erhalten wird.

**11.** Verfahren nach Anspruch 8, das des Weiteren umfasst, dass die Datenkonvertierungseinheit zuerst die Daten rundet, die durch die Rundungseinheit verarbeitet werden sollen, und dann den Langbit-Gleitkommadatentyp gemäß dem Versatz des Exponentenbits (Versatz) und der Länge des Exponentenbits (EL), die durch das Gleitkommadatenstatistikmodul erhalten werden, in den Kurzbit-Gleitkommadatentyp konvertiert.

**12.** Verfahren nach Anspruch 7, das des Weiteren umfasst, dass eine Operations-Cache-Einheit (31) ein Zwischenoperationsergebnis der Addition und Multiplikation in dem Vorwärtspropagationsprozess unter Verwendung des Langbit-Gleitkommadatentyps speichert.

**Revendications**

**1.** Dispositif pour réaliser un processus de propagation vers l'avant d'un réseau neuronal artificiel comprenant un module de statistiques de données à virgule flottante, une unité de conversion de données (32) et un module d'opérations de données à virgule flottante,

dans lequel :

le module de statistiques de données à virgule flottante est utilisé pour réaliser une analyse statistique sur divers types de données requises pour le processus de propagation vers l'avant du réseau neuronal artificiel, pour obtenir un décalage d'un bit d'exposant, offset, et une longueur du bit d'exposant, EL ;

dans lequel le module de statistiques de données à virgule flottante comprend une unité d'extraction de données (21), une unité statistique (22), et une unité d'analyse (23),

dans lequel l'unité d'extraction de données (21) est utilisée pour extraire les divers types de données pour le processus de propagation vers l'avant sur la base de données à virgule flottante à bit long,

l'unité statistique (22) est utilisée pour compter la plage de données d'un même type de données et la répartition de données de chaque segment de données, et

l'unité d'analyse (23) est utilisée pour, sur la base de la plage de données d'un même type de données et de la répartition de données de chaque segment de données comptés par l'unité statistique, obtenir le décalage du bit d'exposant, offset, et la longueur du bit d'exposant, EL, qui doivent être réglés pour chacun des divers types de données représentées en tant que les données à virgule flottante à bit court ;

dans lequel les données à virgule flottante à bit long sont des données à virgule flottante initiales, les données à virgule flottante à bit court signifient que les données à virgule flottante initiales sont représentées par moins de bits que les données à virgule flottante initiales ;

dans lequel la longueur du bit d'exposant, EL, pour chacun des divers types de données est réglée de sorte qu'une plage de données représentable comprenne le plus possible de données pour ce type de données ;

l'unité de conversion de données est utilisée pour convertir un type de données à virgule flottante à bit long en un type de données à virgule flottante à bit court, sur la base du décalage du bit d'exposant, offset, et de la longueur du bit d'exposant, EL, qui sont obtenus par le module de statistiques de données à virgule flottante ;

après que des entrées, des poids et/ou des données biaisées qui sont requis pour le processus de propagation vers l'avant du réseau neuronal artificiel sont représentés en tant que données à virgule flottante à bit court dans le type de données à virgule flottante à bit court, par l'unité de conversion de données, le module d'opérations de données à virgule flottante est utilisé pour réaliser le processus de propagation vers l'avant du réseau neuronal artificiel sur les données à virgule flottante à bit court.

2. Dispositif pour réaliser un processus de propagation vers l'avant d'un réseau neuronal artificiel selon la revendication 1, **caractérisé en ce qu'**il comprend en outre une unité d'arrondissement (33) qui est utilisée pour réaliser une opération d'arrondissement sur les données dépassant la plage de précision à virgule flottante à bit court après que l'opération est achevée.

3. Dispositif pour réaliser un processus de propagation vers l'avant d'un réseau neuronal artificiel selon la revendication 2, **caractérisé en ce que** l'unité d'arrondissement est sélectionnée parmi une unité d'arrondissement aléatoire, une unité d'arrondissement à l'entier le plus proche, une unité d'arrondissement vers le haut, une unité d'arrondissement vers le bas, et une unité d'arrondi.

4. Dispositif pour réaliser un processus de propagation vers l'avant d'un réseau neuronal artificiel selon la revendication 3, dans lequel l'unité d'arrondissement aléatoire réalise les opérations suivantes :

$$y = \begin{cases} \lfloor x \rfloor & \text{w.p. } 1 - \frac{x - \lfloor x \rfloor}{\varepsilon} \\ \lfloor x \rfloor + \varepsilon & \text{w.p. } \frac{x - \lfloor x \rfloor}{\varepsilon} \end{cases}.$$

dans lequel y représente les données à virgule flottante à bit court après un arrondissement aléatoire, x représente les données à virgule flottante à bit long avant un arrondissement aléatoire, et $\varepsilon$ est l'entier positif le plus petit que le format de représentation de données à virgule flottante à bit court courant peut représenter, c'est-à-dire $2^{\text{offset}-(X-1-EL)}$, $\lfloor x \rfloor$ représente les données à virgule flottante à bit court obtenues par l'interception directe des données initiales x ;
w.p. représente une probabilité, c'est-à-dire que, lorsque les données arrondies aléatoirement y sont

$\lfloor x \rfloor$, la probabilité est $1 - \frac{x - \lfloor x \rfloor}{\varepsilon}$, et, lorsqu'elles

sont $\lfloor x \rfloor + \varepsilon$, la probabilité est $\frac{x - \lfloor x \rfloor}{\varepsilon}$ ;

dans lequel l'unité d'arrondissement à l'entier le plus proche réalise les opérations suivantes :

$$y = \begin{cases} \lfloor x \rfloor & \text{si} & \lfloor x \rfloor \le x \le \lfloor x \rfloor + \frac{\varepsilon}{2} \\ \lfloor x \rfloor + \varepsilon & \text{si} & \lfloor x \rfloor + \frac{\varepsilon}{2} \le x \le \lfloor x \rfloor + \varepsilon \end{cases} ;$$

dans lequel y représente les données à virgule flottante à bit court après un arrondissement à l'entier le plus proche, X représente les données à virgule flottante à bit long avant un arrondissement à l'entier le plus proche, et $\varepsilon$ est l'entier positif le plus petit que le format de représentation de données à virgule flottante à bit court courant peut représenter, c'est-à-dire $2^{\text{offset-(X-1-EL)}}$, $\lfloor x \rfloor$ est un multiple entier de $\varepsilon$ dont la valeur est le nombre maximal inférieur ou égal à X ;

dans lequel l'unité d'arrondissement vers le haut réalise les opérations suivantes :

$$y = \lceil x \rceil ;$$

dans lequel y représente les données à virgule flottante à bit court après un arrondissement vers le haut, x représente les données à virgule flottante à bit long avant un arrondissement vers le haut, $\lfloor x \rfloor$ est un multiple entier de $\varepsilon$ dont la valeur est le nombre minimal supérieur ou égal à x; et $\varepsilon$ est l'entier positif le plus petit que le format de représentation de données à virgule flottante à bit court courant peut représenter, c'est-à-dire $2^{\text{offset-(X-1-EL)}}$ ;

dans lequel l'unité d'arrondissement vers le bas réalise les opérations suivantes :

$$y = \lfloor x \rfloor ;$$

dans lequel y représente les données à virgule flottante à bit court après un arrondissement vers le bas, x représente les données à virgule flottante à bit long avant un arrondissement vers le bas, $\lceil x \rceil$ est un multiple entier de $\varepsilon$ dont la valeur est le nombre maximal inférieur ou égal à x ; et $\varepsilon$ est l'entier positif le plus petit que le format de représentation de données à virgule flottante à bit court courant peut représenter, c'est-à-dire $2^{\text{offset-(X-1-EL)}}$ ;

dans lequel l'unité d'arrondi réalise les opérations suivantes :

$$y = [x] ;$$

dans lequel y représente les données à virgule flottante à bit court après l'arrondi, x représente les données à virgule flottante à bit long avant l'arrondi, et [x] représente le nombre obtenu par l'arrondi direct des données à virgule flottante à bit court pour les données initiales x.

5. Dispositif pour réaliser un processus de propagation vers l'avant d'un réseau neuronal artificiel selon la revendication 2, **caractérisé en ce que** l'unité de conversion de données d'abord arrondit les données qui doivent être traitées à travers l'unité d'arrondissement, puis convertit le type de données à virgule flottante à bit long en le type de données à virgule flottante à bit court en fonction du décalage du bit d'exposant, offset, et de la longueur du bit d'exposant, EL, obtenus par le module de statistiques de données à virgule flottante.

6. Dispositif pour réaliser un processus de propagation vers l'avant d'un réseau neuronal artificiel selon la revendication 1, **caractérisé en ce qu'**il comprend en outre une unité de mise en mémoire cache d'opérations (31) qui stocke un résultat d'opération intermédiaire d'addition et de multiplication dans le processus de propagation vers l'avant en utilisant le type de données à virgule flottante à bit long.

7. Procédé pour réaliser un processus de propagation vers l'avant d'un réseau neuronal artificiel comprenant les étapes suivantes :

la réalisation, par un module de statistiques de données à virgule flottante, d'une analyse statistique sur divers types de données requises pour le processus de propagation vers l'avant du réseau neuronal artificiel, pour obtenir un décalage d'un bit d'exposant, offset, et une longueur du bit d'exposant, EL ;

dans lequel le module de statistiques de données à virgule flottante comprend une unité d'extraction de données (21), une unité statistique (22), et une unité d'analyse (23),

dans lequel le procédé comprend en outre :

par l'unité d'extraction de données (21), l'extraction des divers types de données pour le processus de propagation vers l'avant sur la base de données à virgule flottante à bit long,

par l'unité statistique (22), le comptage de la plage de données d'un même type de données et la répartition de données de chaque segment de données, et

par l'unité d'analyse (23), sur la base de la plage de données d'un même type de données et de la répartition de données de chaque segment de données comptés par l'unité statistique, l'obtention du décalage du bit d'exposant, offset, et de la longueur du bit d'exposant, EL, qui doivent être réglés pour chacun des divers types de données représentées en tant que les données à virgule flottante à bit court ;

dans lequel les données à virgule flottante à bit long sont des données à virgule flottante initiales, les données à virgule flottante à bit court signifient que les données à virgule flottante initiales sont représentées par moins de bits que les données à virgule flottante initiales ;

dans lequel la longueur du bit d'exposant, EL, pour chacun des divers types de données est réglée de sorte qu'une plage de données représentable comprenne le plus possible de données pour ce type de données ;

par une unité de conversion de données (32), la conversion d'un type de données à virgule flottante à bit long en un type de données à virgule flottante à bit court, sur la base du décalage du bit d'exposant, offset, et de la longueur du bit d'exposant, EL, qui sont obtenus par le module de statistiques de données à virgule flottante ;

après que des entrées, des poids et/ou des données biaisées qui sont requis pour le processus de propagation vers l'avant du réseau neuronal artificiel sont représentés en tant que données à virgule flottante à bit court dans le type de données à virgule flottante à bit court, par l'unité de conversion de données, la réalisation, par un module d'opérations de données à virgule flottante, du processus de propagation vers l'avant du réseau neuronal artificiel sur les données à virgule flottante à bit court.

8. Procédé selon la revendication 7, **caractérisé en ce qu'**il comprend en outre une unité d'arrondissement (33) réalisant une opération d'arrondissement sur les données dépassant la plage de précision à virgule flottante à bit court après que l'opération est achevée.

9. Procédé selon la revendication 8, **caractérisé en ce que** l'unité d'arrondissement est sélectionnée parmi une unité d'arrondissement aléatoire, une unité d'arrondissement à l'entier le plus proche, une unité d'arrondissement vers le haut, une unité d'arrondissement vers le bas, et une unité d'arrondi.

10. Procédé selon la revendication 9, comprenant en outre :

par l'unité d'arrondissement aléatoire, la réalisation des opérations suivantes :

$$y = \begin{cases} \lfloor x \rfloor & \text{w.p. } 1 - \frac{x - \lfloor x \rfloor}{\varepsilon} \\ \lfloor x \rfloor + \varepsilon & \text{w.p. } \frac{x - \lfloor x \rfloor}{\varepsilon} \end{cases}$$

dans lequel y représente les données à virgule flottante à bit court après un arrondissement aléatoire, x représente les données à virgule flottante à bit long avant un arrondissement aléatoire, et $\varepsilon$ est l'entier positif le plus petit que le format de représentation de données à virgule flottante à bit court courant peut représenter, c'est-à-dire $2^{\text{offset-(X-1-EL)}}$, $\lfloor x \rfloor$ représente les données à virgule flottante à bit court obtenues par l'interception directe des données initiales x ; w.p. représente une probabilité, c'est-à-dire que, lorsque les données arrondies aléatoirement y sont $\lfloor x \rfloor$, la probabilité est $1 - \frac{x - \lfloor x \rfloor}{\varepsilon}$, et, lorsqu'elles sont $\lfloor x \rfloor + \varepsilon$, la probabilité est $\frac{x - \lfloor x \rfloor}{\varepsilon}$ ;

par l'unité d'arrondissement à l'entier le plus proche, la réalisation des opérations suivantes :

$$y = \begin{cases} \lfloor x \rfloor & \text{si} & \lfloor x \rfloor \le x \le \lfloor x \rfloor + \frac{\varepsilon}{2} \\ \lfloor x \rfloor + \varepsilon & \text{si} & \lfloor x \rfloor + \frac{\varepsilon}{2} \le x \le \lfloor x \rfloor + \varepsilon \end{cases}$$

dans lequel y représente les données à virgule flottante à bit court après un arrondissement à l'entier le plus proche, x représente les données à virgule flottante à bit long avant un arrondissement à l'entier le plus proche, et $\varepsilon$ est l'entier positif le plus petit que le format de représentation de données à virgule flottante à bit court courant peut représenter, c'est-à-dire $2^{\text{offset-(X-1-EL)}}$, $\lfloor x \rfloor$ est un multiple entier de $\varepsilon$ dont la valeur est le nombre maximal inférieur ou égal à X ;

par l'unité d'arrondissement vers le haut, la réalisation des opérations suivantes :

$$y = \lceil x \rceil ;$$

dans lequel y représente les données à virgule flottante à bit court après un arrondissement vers le haut, x représente les données à virgule flottante à bit long avant un arrondissement vers le haut, $\lfloor x \rfloor$ est un multiple entier de $\varepsilon$ dont la valeur est le nombre minimal supérieur ou égal à x; et $\varepsilon$ est l'entier positif le plus petit que le format de représentation de données à virgule flottante à bit court courant peut représenter, c'est-à-dire $2^{\text{offset-(X-1-EL)}}$ ;

par l'unité d'arrondissement vers le bas, la réalisation des opérations suivantes :

$$y = \lfloor x \rfloor;$$

dans lequel y représente les données à virgule flottante à bit court après un arrondissement vers le bas, x représente les données à virgule flottante à bit long avant un arrondissement vers le bas, $\lceil x \rceil$ est un multiple entier de $\varepsilon$ dont la valeur est le nombre maximal inférieur ou égal à x ; et $\varepsilon$ est l'entier positif le plus petit que le format de représentation de données à virgule flottante à bit court courant peut représenter, c'est-à-dire $2^{offset-(X-1-EL)}$ ;

par l'unité d'arrondi, la réalisation des opérations suivantes :

$$y = [x];$$

dans lequel y représente les données à virgule flottante à bit court après l'arrondi, x représente les données à virgule flottante à bit long avant l'arrondi, et [x] représente le nombre obtenu par l'arrondi direct des données à virgule flottante à bit court pour les données initiales x.

11. Procédé selon la revendication 8, comprenant en outre :

par l'unité de conversion de données, d'abord l'arrondissement des données qui doivent être traitées à travers l'unité d'arrondissement, puis la conversion du type de données à virgule flottante à bit long en le type de données à virgule flottante à bit court en fonction du décalage du bit d'exposant, offset, et de la longueur du bit d'exposant, EL, obtenus par le module de statistiques de données à virgule flottante.

12. Procédé selon la revendication 7, comprenant en outre :

par une unité de mise en mémoire cache d'opérations (31), le stockage d'un résultat d'opération intermédiaire d'addition et de multiplication dans le processus de propagation vers l'avant en utilisant le type de données à virgule flottante à bit long.

| 1 | M | N |
|---|---|---|

sign bit      exponent bit      significand/significant bit

short-bit floating point data representation

$M+N+1=X$

| int | Offset      | int | EL |

FIG 1

| data extraction unit | → | statistical unit | → | analysis unit |
|---|---|---|---|---|

21                  22                 23

FIG 2

31 ⟩ operation cache unit ⟵ rounding unit

32 ⟩ data conversion unit

33

FIG 3

out0　out1　out2　out3

active　active　active　active

+　+　+　+

w00　w01　w02　w03

......

in0　in1　in2　in3

FIG 4

short-bit-32-bit floating
point conversion unit

53

54

forward operation
module

backward
operation module

32-bit-short-bit floating
point conversion unit

rounding unit

51

55

52

FIG 5

**EP 3 451 165 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **MATTHIEU COURBARIAUX et al.** Training deep neural networks with low precision multiplications. *CORR (ARXIV),* 23 September 2015, (v5), 1-10